(19) Europäisches Patentamt
European Patent Office
Office européen des brevets

(11) **EP 2 480 868 B1**

(12) # EUROPÄISCHE PATENTSCHRIFT

(45) Veröffentlichungstag und Bekanntmachung des Hinweises auf die Patenterteilung:
**08.01.2014 Patentblatt 2014/02**

(21) Anmeldenummer: **10763149.1**

(22) Anmeldetag: **16.09.2010**

(51) Int Cl.:
*G01J 3/28* [(2006.01)]   *G01J 3/44* [(2006.01)]
*G01J 3/457* [(2006.01)]   *G01N 21/27* [(2006.01)]
*G01N 21/65* [(2006.01)]

(86) Internationale Anmeldenummer:
**PCT/EP2010/063606**

(87) Internationale Veröffentlichungsnummer:
**WO 2011/033017 (24.03.2011 Gazette 2011/12)**

(54) **VERFAHREN ZUR ERZEUGUNG UND ZUR DETEKTION EINES RAMAN-SPEKTRUMS**

METHOD FOR GENERATING AND FOR DETECTING A RAMAN SPECTRUM

PROCÉDÉ DE PRODUCTION ET DE DÉTECTION D'UN SPECTRE RAMAN

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **21.09.2009 DE 102009029648**

(43) Veröffentlichungstag der Anmeldung:
**01.08.2012 Patentblatt 2012/31**

(73) Patentinhaber: **Forschungsverbund Berlin E.V.**
**12489 Berlin (DE)**

(72) Erfinder:
• **SCHMIDT, Heinar**
**14129 Berlin (DE)**
• **PÉREZ KAISER, Daniel**
**13355 Berlin (DE)**
• **MAIWALD, Martin**
**12045 Berlin (DE)**

(74) Vertreter: **Gulde Hengelhaupt Ziebig & Schneider Patentanwälte - Rechtsanwälte**
**Wallstraße 58/59**
**D-10179 Berlin (DE)**

(56) Entgegenhaltungen:
**US-A1- 2005 254 047**

• **SHREVE A P ET AL: "EFFECTIVE REJECTION OF FLUORESCENCE INTERFERENCE IN RAMAN SPECTROSCOPY USING A SHIFTED EXCITATION DIFFERENCE TECHNIQUE", APPLIED SPECTROSCOPY, THE SOCIETY FOR APPLIED SPECTROSCOPY. BALTIMORE, US, Bd. 46, Nr. 4, 1. April 1992 (1992-04-01), Seiten 707-711, XP000264023, ISSN: 0003-7028, DOI: DOI:10.1366/0003702924125122**
• **MCCAIN S T ET AL: "Multi-excitation Raman spectroscopy technique for fluorescence rejection", OPTICS EXPRESS OPTICAL SOCIETY OF AMERICA USA, Bd. 16, Nr. 15, 27. Mai 2008 (2008-05-27), Seiten 10975-10991, XP002615262, ISSN: 1094-4087**
• **MAIWALD M ET AL: "Rapid shifted excitation Raman difference spectroscopy with a distributed feedback diode laser emitting at 785 nm", APPLIED PHYSICS B ; LASERS AND OPTICS, SPRINGER, BERLIN, DE, Bd. 85, Nr. 4, 20. September 2006 (2006-09-20), Seiten 509-512, XP019459658, ISSN: 1432-0649, DOI: DOI: 10.1007/S00340-006-2459-8**

**Beschreibung**

Die vorliegende Erfindung betrifft ein Verfahren und eine Vorrichtung zur Erzeugung und zur Detektion eines Raman-Spektrums.

Die Raman-Spektroskopie wird aufgrund ihrer Eignung zur In-situ- und Online-Analytik zunehmend in der industriellen Prozess- und Umweltmesstechnik eingesetzt. Ein Nachteil hierbei ist jedoch, dass einige Proben in der Praxis infolge Fluoreszenz und/oder aufgrund ihrer Streueigenschaften Spektren liefern, deren Qualität durch einen hohen Untergrund beeinträchtigt wird, insbesondere, wenn ohne Probenvorbereitung und mit kleinbauenden Apparaturen gearbeitet wird.

Ein Ansatz, dieses Problem zu lösen ist die Shifted-excitation-Raman-Differenzspektroskopie (nachfolgend auch mit "SERDS" bezeichnet). Hierbei werden zwei Ramanspektren mit leicht gegeneinander verschobenen Anregungswellenlängen aufgenommen. Der breitbandige Untergrund wird durch Differenzbildung eliminiert und aus dem Differenzspektrum das Ramanspektrum rekonstruiert.

Seit der Entwicklung von Diodenlasern ist es üblich, die Anregungswellenlänge über die Temperatur durchzustimmen. Die Temperatur wird dabei typischer Weise thermoelektrisch geregelt und stabilisiert. Mit der Temperaturänderung lässt sich die Emissionswellenlänge um einige Nanometer verschieben. (J. Zhao, M. M. Carraba, and F. S. Allen, Appl. Spectrosc. 56, 834 (2002)).

Einfache Fabry-Perot-Diodenlaser verfügen jedoch nicht über die nötige Wellenlängenstabilität für die Ramanspektroskopie, so dass hierfür eine zusätzliche Stabilisierung erforderlich ist, z.B. ermöglichen Halbleiterlaser mit externer Kavität (ECL-Laser) eine Frequenzverschiebung durch Drehen des äußeren Gitters. (T.F. Cooney, H.T. Skinner und S.M. Angel in Appl. Spectrosc., Vol. 49 (1995), pp1846-1851).

Steht keine durchstimmbare Laserquelle zur Verfügung, besteht bei den meisten dispersiven Spektrometern die Möglichkeit, das Gitter um einen kleinen Winkel zu drehen, wodurch sich das Spektrum samt Untergrund um den Betrag Δ spektral verschiebt (Steven E. J. Bell, Elsa S. O. Bourguignon and Andrew Dennis, Analyst, Vol. 123 (1729-1734) (1998)).

Aus WO 2006/134103 A1 und M. Maiwald, G. Erbert, A. Klehr, H.-D. Kronfeldt, H. Schmidt, B. Sumpf and G. Tränkle, Appl. Phys. B 85, 509-512 (2006) ist es bekannt, die direkte Modulation der Wellenlänge eines DFB-Lasers über dessen Injektionsstromstärke vorzunehmen. Durch Ansteuerung bei 785 nm mit zwei verschiedenen Stromstärken emittiert der frequenzstabile DFB-Diodenlaser entsprechend bei zwei verschiedenen Wellenlängen. Der Hauptvorteil liegt in der Möglichkeit des schnellen Wechselns zwischen zwei Wellenlängen, ohne dass bewegliche Teile benötigt werden. Somit ist diese Methode für die schnelle Onlineanalytik prädestiniert.

WO 2006/130728 A2 offenbart ein Verfahren zur Erzeugung und Detektion eines Raman-Spektrums eines zu untersuchenden Mediums, wobei ein Differenzspektrum durch Subtraktion des ersten und zweiten Spektrums berechnet wird.

Im Stand der Technik sind verschiedene Algorithmen zur Rekonstruktion eines Raman-Spektrums aus einem Differenzspektrum bekannt.

Shreve et al. (R.A. Mathies, A.P. Shreve, N.J. Cherepy, Appl. Spectrosc. 46, 707 (1992)) beschreibt eine manuelle Anpassung von Lorentz-Kurven an das Differenzspektrum nach der Methode der kleinsten Fehlerquadrate vor. Für diese Modellierung ist jedoch Vorwissen über das Originalspektrum sowie eine Kontrolle durch einen Benutzer erforderlich, weshalb diese Technik nicht automatisierbar ist.

Aufgrund der Ähnlichkeit der SERD-Spektren zu Derivativspektren erster Ordnung ist es nahe liegend, diese zu integrieren. Dieser Vorgang ist automatisierbar, führt jedoch zu Artefaktbildung, was eine manuelle Nachbearbeitung nötig macht.

*Matousek et al.* beschreiben einen linearen rekursiven Algorithmus mit linearer Interpolation zwischen den Datenpunkten (P. Matousek, M. Towrie, and A. W. Parker, "Simple reconstruction algorithm for shifted excitation Raman difference spectroscopy," Applied Spectroscopy, vol. 59, 2006). Dieser Algorithmus ist automatisierbar, es werden jedoch Vorbedingungen an die Verteilung der Differenzsignale in den SERD-Spektren gestellt. Somit ist diese Methode nicht allgemeingültig. Zudem kommt es auch hier zu Artefaktbildung.

*Zhao et al.* beschreiben mehrere auf Entfaltung des SERD-Spektrums basierende Integral-transformationen zur Spektrenrekonstruktion vor (J. Zhao, M. Carrabba, and F. Allen, Applied Spectroscopy, vol. 56, no. 7, 2002). Diese Transformationen sind automatisierbar, die resultierenden Rekonstruktionsspektren sind jedoch ebenfalls nicht frei von Artefakten.

*Rebecca Willett* beschreibt die Rekonstruktionsproblematik als ein inverses Poisson-Problem, und verwendet einen statistischen Erwartungs-Maximierungs (EM) Algorithmus (Multiscale reconstruction for photon-limited shifted excitation Raman spectroscopy," ICASSP 2007). Der verwendete Algorithmus ist jedoch noch nicht vollständig ausformuliert und es bleiben Fragen bezüglich der experimentellen Durchführung hinsichtlich Wahl und Anzahl der Anregungsfrequenzen offen.

*McCain et al.* beschreiben einen Expectation-Maximization Algorithmus, der Messwerte von mehr als zwei Anregungsfrequenzen verwendet (S. T. McCain, R. M. Willett, D. J. Brady, "Multi-excitation Raman spectroscopy technique for fluorescence rejection", Optics Express, vol. 16, no. 15, 2008). Dieser Algorithmus erlaubt, das Ramansignal gegenüber dem Fluoreszenz-Hintergrundsignal zu filtern.

Die bekannten Algorithmen zur Spektrenrekonstruktion liefern rein qualitative Spektren und führen entweder zu Artefaktbildung oder setzen Vorwissen über das Raman-Spektrum bzw. Vorbedingungen an die SERD-Spektren voraus. Somit ist automatisierte und gleichzeitig qualitative und quantitative SERD-Spektroskopie (z.B. Konzentrationsmessreihen) nach dem bisherigen Stand der Technik nicht möglich.

Es ist daher Aufgabe der vorliegenden Erfindung, ein Verfahren und eine Vorrichtung zur Erzeugung und zur Detektion eines Raman-Spektrums anzugeben, die eine automatisierte bzw. automatisierbare und gleichzeitig qualitative und quantitative SERD-Spektroskopie (z.B. Konzentrationsmessreihen) ermöglichen.

Diese Aufgaben werden erfindungsgemäß durch die unabhängigen Patentansprüche gelöst. Bevorzugte Ausgestaltungen der Erfindung sind in den Unteransprüchen enthalten.

Das erfindungsgemäße Verfahren zur Erzeugung und zur Detektion eines Raman-Spektrums eines zu untersuchenden Mediums weist folgende Verfahrensschritte auf: Einstrahlen von Anregungsstrahlung auf das zu untersuchende Medium, wobei das zu untersuchende Medium zeitlich versetzt mit einer ersten Anregungsstrahlung einer ersten Wellenlänge und einer zweiten Anregungsstrahlung einer zweiten Wellenlänge bestrahlt wird, wobei sich die erste Wellenlänge von der zweiten Wellenlänge unterscheidet, spektrale Analyse der vom zu untersuchenden Medium gestreuten ersten Anregungsstrahlung, wobei aus der gestreuten ersten Anregungsstrahlung ein erstes Spektrum detektiert wird, das einer Vielzahl von Wellenlängen jeweils einen Intensitätswert zuordnet, spektrale Analyse der vom zu untersuchenden Medium gestreuten zweiten Anregungsstrahlung, wobei aus der gestreuten zweiten Anregungsstrahlung ein zweites Spektrum detektiert wird, das einer Vielzahl von Wellenlängen jeweils einen Intensitätswert zuordnet, Berechnung eines Raman-Spektrums des zu untersuchenden Mediums aus dem ersten Spektrum und dem zweiten Spektrum, wobei das erste Spektrum und das zweite Spektrum in Bezug auf ihre Intensitätswerte zueinander normiert werden, und nachfolgend: ein erstes Differenzspektrum aus der Differenz des ersten Spektrums und des zweiten Spektrums berechnet wird, ein zweites Differenzspektrum aus der Differenz des zweiten Spektrums und des ersten Spektrums berechnet wird, das erste Differenzspektrum in ein erstes Transformationsspektrum überführt wird, wobei einer Vielzahl von Wellenlängen jeweils ein Intensitätswert zugeordnet wird, und sich der Intensitätswert einer Wellenlänge des ersten Transformationsspektrums durch Addition eines ersten Intensitätswertes einer ersten Wellenlänge des ersten Differenzspektrums und des Betrages eines zweiten Intensitätswertes einer zweiten Wellenlänge des ersten Differenzspektrums berechnet, wobei die erste Wellenlänge des ersten Differenzspektrums um einen vorgegebenen Transformationsparameter größer als die Wellenlänge des ersten Transformationsspektrums und die zweite Wellenlänge des ersten Differenzspektrums um den Transformationsparameter kleiner als die Wellenlänge des ersten Transformationsspektrums ist, wobei als Transformationsparameter ein Wert zwischen 0.2 und 0.8 des Betrages der Differenz der ersten Wellenlänge und der zweiten Wellenlänge verwendet wird, und das zweite Differenzspektrum in ein zweites Transformationsspektrum überführt wird, wobei einer Vielzahl von Wellenlängen jeweils ein Intensitätswert zugeordnet wird, und sich der Intensitätswert einer Wellenlänge des zweiten Transformationsspektrums durch Addition des Betrages eines ersten Intensitätswertes einer ersten Wellenlänge des zweiten Differenzspektrums und eines zweiten Intensitätswertes einer zweiten Wellenlänge des zweiten Differenzspektrums berechnet, wobei die erste Wellenlänge des zweiten Differenzspektrums um den Transformationsparameter größer als die Wellenlänge des zweiten Transformationsspektrums und die zweite Wellenlänge des zweiten Differenzspektrums um den Transformationsparameter kleiner als die Wellenlänge des zweiten Transformationsspektrums ist, und das Raman-Spektrum durch Addition des ersten Transformationsspektrums und des zweiten Transformationsspektrums berechnet wird.

Sofern der Messaufbau vor der Messung auf eines der beiden Ausgangsspektren (erstes oder zweites Spektrum) kalibriert wurde, wird die Wellenzahlenskala vorzugsweise im Anschluss an die Berechnung des Raman-Spektrums (Addition des ersten Transformationsspektrums und des zweiten Transformationsspektrums) um + oder - Delta/2 (also um den halben Wellenlängenabstand) verschoben, je nachdem für welches der beiden Ausgangsspektren der Aufbau kalibriert wurde.

Vorzugsweise wird als Transformationsparameter der halbe Betrag der Differenz der ersten Wellenlänge und der zweiten Wellenlänge verwendet. Vorzugsweise werden die erste Wellenlänge und die zweite Wellenlänge aus dem Intervall 250 - 1100 nm, sehr bevorzugt 400 - 950 nm ausgewählt.

Die Idee der vorliegenden Erfindung besteht im Einsatz eines neuartigen Rekonstruktionsalgorithmus für die automatisierte Shifted-excitation-Raman-Differenzspektroskopie (SERDS) für Online- und In-situ-Anwendungen. Das Verfahren zeichnet sich gegenüber dem Stand der Technik dadurch aus, dass es einfach, d.h. ohne Vorinformation über die Probe (das zu untersuchende Medium) und ohne Eingriff eines Operators automatisierbar ist. Es wurde gefunden, dass mit dem erfindungsgemäßen Verfahren die quantitative Information der Spektren erhalten bleibt. Weiterhin ist das erfindungsgemäße Verfahren universell für alle Raman-Apparaturen, die eine Mehrwellenlängenanregung zulassen, geeignet und kann auch bei anderen spektroskopischen Methoden, z.B. IR-Absorption, Atom-Fluoreszenz zur Untergrundunterdrückung, zur Rekonstruktion von konventionellen Raman-Derivativspektren oder generell zur Rekonstruktion von Derivativspektren eingesetzt werden.

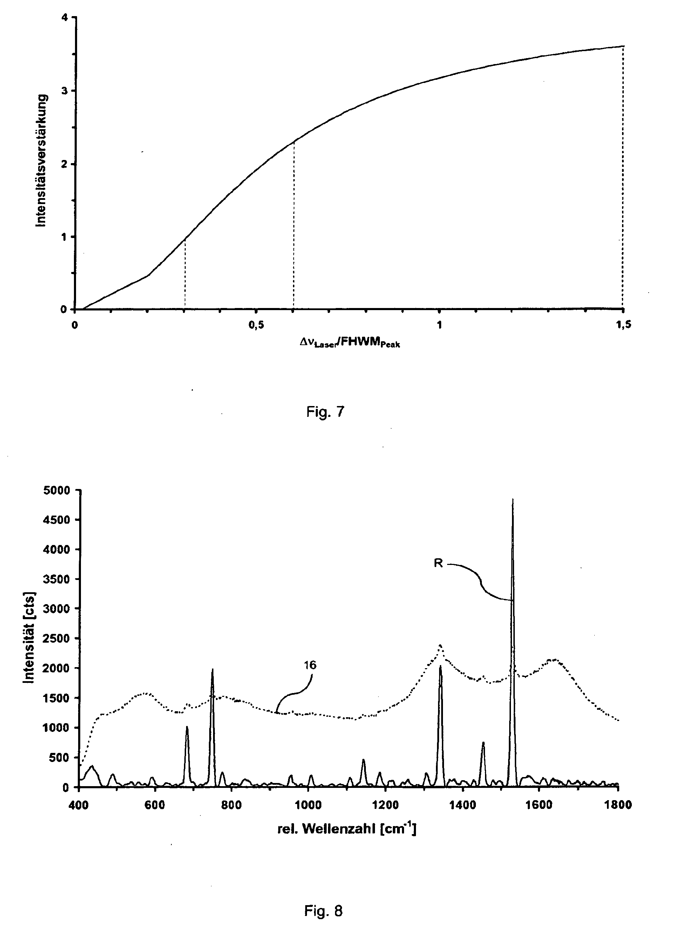

Der Abstand der beiden Wellenlängen kann nahezu beliebig groß sein. Vorzugsweise wird der Wellenlängenabstandswert $\Delta$ größer gleich FWHM/2 gewählt, bevorzugte Intervalle für das Verhältnis $\Delta\nu_{Laser}$ / FWHM $_{Peak}$ sind 0,3-10, sehr bevorzugt 0,6-1,5. Fig. 7 gibt den Arbeitsbereich der Methode an. Es wurde gefunden, dass dieser für den Quotienten von Wellenlängenverschiebung und Halbwertsbreite $\Delta\nu_{Laser}$ / FWHM $_{Peak}$ zwischen 0,6 und 1,5 liegt.

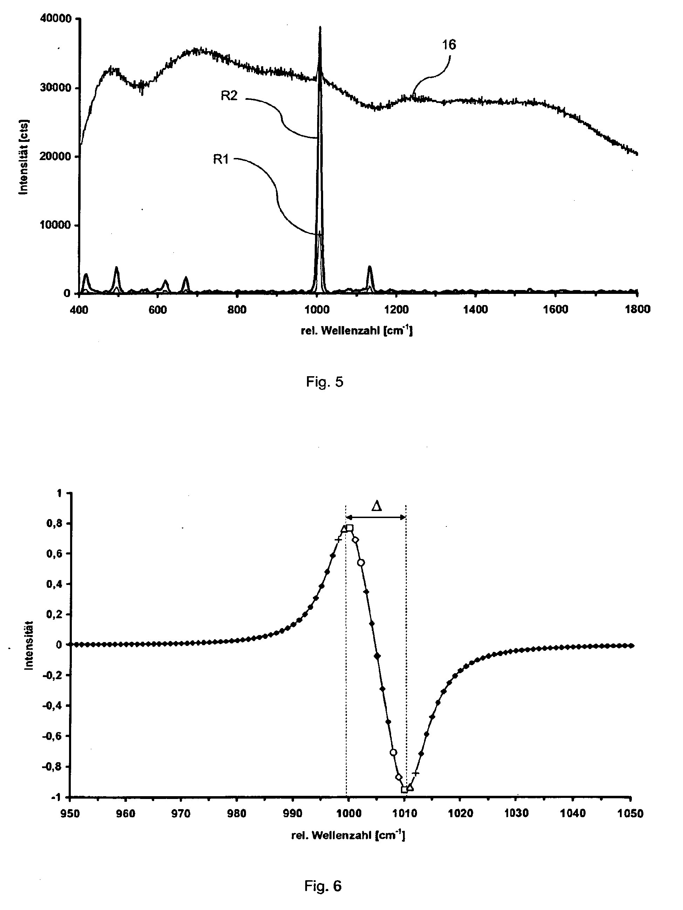

Ein weiterer Vorteil gegenüber den bisherigen Rekonstruktionsmethoden ist die Möglichkeit der Mehrfachanwendung des Rekonstruktionsverfahrens. Durch Variation des Transformationsparameters $\delta$ können aus denselben Rohdaten n weitere Spektren konstruiert und anschließend addiert werden. Dies ist bei *n*-facher Anwendung annähernd äquivalent zu *n* einzelnen SERDS-Messungen. Das Rauschen nimmt bei n-facher Anwendung um den Faktor $\sqrt{n}$ ab und das Signal in erster Näherung um den Faktor *n* zu. Der Algorithmus kann so oft angewendet werden, bis keine weitere Verbesserung des Signal/Untergrundverhältnisses mehr erreicht wird. Die Zahl der Wiederholungen ist dabei limitiert durch die Anzahl der Datenpunkte im Bereich der Extrema des Differenzpeaks (siehe Fig. 6). Die Zahl der Wiederholungen n kann maximal die Anzahl der Pixel k im Bereich der Halbwertsbreite FWHM des Ramansignals annehmen. Da Wiederholungen im Bereich kleiner Differenzintensitäten nicht mehr zur Verbesserung der SERDS-Intensität führen, wird die Zahl der Wiederholungen der Anwendung des Algorithmus n bevorzugt zwischen 1 und k/2 gewählt. Der Transformationsparameter $\delta$ wird bei Mehrfachanwendung des Algorithmus bevorzugt vom halben Wellenlängenabstand $\Delta_{Laser}$ ausgehend in geradzahligen Schritten um bis zu +/- k/4 Pixel variiert.

Das erfindungsgemäße Verfahren zur Erzeugung und zur Detektion eines Raman-Spektrums eines zu untersuchenden Mediums weist folgende Verfahrensschritte auf: Einstrahlen von Anregungsstrahlung auf das zu untersuchende Medium, wobei das zu untersuchende Medium zeitlich versetzt mit einer ersten Anregungsstrahlung einer ersten Wellenlänge und einer zweiten Anregungsstrahlung einer zweiten Wellenlänge bestrahlt wird, wobei sich die erste Wellenlänge von der zweiten Wellenlänge unterscheidet; spektrale Analyse der vom zu untersuchenden Medium gestreuten ersten Anregungsstrahlung, wobei aus der gestreuten ersten Anregungsstrahlung ein erstes Spektrum detektiert wird, das einer Vielzahl von Wellenlängen jeweils einen Intensitätswert zuordnet; spektrale Analyse der vom zu untersuchenden Medium gestreuten zweiten Anregungsstrahlung, wobei aus der gestreuten zweiten Anregungsstrahlung ein zweites Spektrum detektiert wird, das einer Vielzahl von Wellenlängen jeweils einen Intensitätswert zuordnet; Berechnung eines Raman-Spektrums des zu untersuchenden Mediums aus dem ersten Spektrum und dem zweiten Spektrum, wobei das erste Spektrum und das zweite Spektrum in Bezug auf ihre Intensitätswerte zueinander normiert werden, und nachfolgend: ein erstes Differenzspektrum aus der Differenz des ersten Spektrums und des zweiten Spektrums berechnet wird, ein zweites Differenzspektrum aus der Differenz des zweiten Spektrums und des ersten Spektrums berechnet wird, das erste Differenzspektrum in ein erstes Transformationsspektrum überführt wird, wobei einer Vielzahl von Wellenlängen jeweils ein Intensitätswert zugeordnet wird, und sich der Intensitätswert einer Wellenlänge des ersten Transformationsspektrums durch Addition eines ersten Intensitätswertes einer ersten Wellenlänge des ersten Differenzspektrums und des Betrages eines zweiten Intensitätswertes einer zweiter Wellenlänge des ersten Differenzspektrums berechnet, wobei die erste Wellenlänge des ersten Differenzspektrums um einen vorgegebenen Transformationsparameter größer als die Wellenlänge des ersten Transformationsspektrums und die zweite Wellenlänge des ersten Differenzspektrums um den Transformationsparameter kleiner als die Wellenlänge des ersten Transformationsspektrums ist, das zweite Differenzspektrum in ein zweites Transformationsspektrum überführt wird, wobei einer Vielzahl von Wellenlängen jeweils ein Intensitätswert zugeordnet wird, und sich der Intensitätswert einer Wellenlänge des zweiten Transformationsspektrums durch Addition des Betrages eines ersten Intensitätswertes einer ersten Wellenlänge des zweiten Differenzspektrums und eines zweiten Intensitätswertes einer zweiter Wellenlänge des zweiten Differenzspektrums berechnet, wobei die erste Wellenlänge des zweiten Differenzspektrums um den Transformationsparameter größer als die Wellenlänge des zweiten Transformationsspektrums und die zweite Wellenlänge des zweiten Differenzspektrums um den Transformationsparameter kleiner als die Wellenlänge des zweiten Transformationsspektrums ist, und das Raman-Spektrum durch Addition des ersten Transformationsspektrums und des zweiten Transformationsspektrums berechnet wird.

Vorzugsweise wird als Transformationsparameter der halbe Betrag der Differenz der ersten Wellenlänge und der zweiten Wellenlänge verwendet. Vorzugsweise werden die erste Wellenlänge und die zweite Wellenlänge aus dem Intervall 250 - 1100 nm, bevorzugt 400 - 950 nm ausgewählt. Vorzugsweise erfolgt die Erzeugung elektromagnetischer Anregungsstrahlung mittels einer Laserdiode mit einem internen frequenzselektiven Element. Vorzugsweise wird die Laserdiode zur alternierenden Erzeugung unterschiedlicher Anregungswellenlängen mittels des an die Laserdiode angelegten elektrischen Stroms alternierend mit zwei unterschiedlichen Anregungsbedingungen angesteuert. Vorzugsweise erfolgt das Hin- und Herschalten zwischen den Anregungsbedingungen mit einer Frequenz größer als 1 Hz. Vorzugsweise erfolgt die spektrale Analyse der vom zu untersuchenden Medium gestreuten elektromagnetischen Strahlung durch Einkoppeln der gestreuten Strahlung in einen spektraloptischen Apparat. Vorzugsweise wird die Detektion der einzelnen Raman-Spektren unterschiedlicher Anregungswellenlängen mit der alternierenden Ansteuerung der Laserdiode synchronisiert. Vorzugsweise erfolgt die Detektion eines Raman-Spektrums jeweils innerhalb eines Zeitintervalls, in dem die Stromstärke des an die Laserdiode angelegten Stroms konstant gehalten wird.

Vorzugsweise wird die Laserdiode innerhalb eines Zeitintervalls mit mindestens zwei unterschiedlichen Anregungsbedingungen derart angesteuert, dass sie auf mindestens zwei Wellenlängen mit einem Wellenlängenabstand emittiert, der mindestens einem Drittel der Halbwertsbreite der Ramansignale (bevorzugter der Hälfte der Halbwertsbreite und sehr bevorzugt der Halbwertsbreite) entspricht. Vorzugsweise wird die Laserdiode innerhalb eines Zeitintervalls mit mindestens zwei unterschiedlichen Anregungsbedingungen derart angesteuert, dass sie auf mindestens zwei Wellenlängen mit einem Wellenlängenabstand emittiert, der mindestens 3 cm$^{-1}$ (0,2 nm bei Anregung mit 785 nm), bevorzugter mindestens 4 cm$^{-1}$ und noch bevorzugter mindestens 8 cm$^{-1}$ entspricht.

Vorzugsweise beträgt das Zeitintervall 1s, bevorzugter 0,1 s. Vorzugsweise wird die Laserdiode vor dem Einkoppeln der Anregungsstrahlung in das zu untersuchende Medium kalibriert. Vorzugsweise wird als frequenzselektives Element ein Gitter, ein Etalon oder ein Mach-Zehnder-Interferometer verwendet. Vorzugsweise wird die von der Laserdiode erzeugte Anregungsstrahlung mittels eines Raman-Messkopfes in das zu untersuchende Medium eingekoppelt. Vorzugsweise wird die von der Laserdiode erzeugte Anregungsstrahlung vor dem Einkoppeln in das zu untersuchende Medium verstärkt. Vorzugsweise wird die vom zu untersuchenden Medium gestreute Strahlung mittels einer optischen Faser in das spektral-optische System eingekoppelt. Vorzugsweise wird die Laserdiode mittels einer Stromquelle angesteuert wird, wobei die Ausgangsleistung der Stromquelle moduliert wird. Vorzugsweise wird zur Modulation ein Funktionsgenerator verwendet. Vorzugsweise werden die einzelnen Raman-Spektren mittels eines Datenverarbeitungsgerätes gespeichert. Vorzugsweise werden zur Synchronisation der Detektionen der Raman-Spektren und der Ansteuerung der Laserdiode sowohl die Ausgangsleistung einer Anregungsquelle moduliert als auch ein Detektor des spektral-optischen Systems synchronisiert.

Die erfindungsgemäße Vorrichtung zur Erzeugung einer Anregungsstrahlung und zur Detektion eines Raman-Spektrums eines zu untersuchenden Mediums weist eine Anregungslichtquelle, Mittel zur Einkopplung der von der Anregungslichtquelle emittierten Anregungsstrahlung in das zu untersuchende Medium, Mittel zur Einkopplung der vom zu untersuchenden Medium gestreuten Strahlung in ein spektral-optisches System und ein Datenverarbeitungsgerät auf, das mit dem spektral-optischen System verbunden ist, wobei das Datenverarbeitungsgerät aus den mindestens zwei detektierten Raman-Spektren unterschiedlicher Anregungswellenlängen ein Raman-Spektrum des zu untersuchenden Mediums berechnet, in dem der Fluoreszenzuntergrund rechnerisch eliminiert ist, und wobei das Datenverarbeitungsgerät ausgebildet ist, das erste Spektrum und das zweite Spektrum in Bezug auf ihre Intensitätswerte zueinander zu normieren, und nachfolgend: ein erstes Differenzspektrum aus der Differenz des ersten Spektrums und des zweiten Spektrums berechnet wird, ein zweites Differenzspektrum aus der Differenz des zweiten Spektrums und des ersten Spektrums berechnet wird, das erste Differenzspektrum in ein erstes Transformationsspektrum überführt wird, wobei einer Vielzahl von Wellenlängen jeweils ein Intensitätswert zugeordnet wird, und sich der Intensitätswert einer Wellenlänge des ersten Transformationsspektrums durch Addition eines ersten Intensitätswertes einer ersten Wellenlänge des ersten Differenzspektrums und des Betrages eines zweiten Intensitätswertes einer zweiter Wellenlänge des ersten Differenzspektrums berechnet, wobei die erste Wellenlänge des ersten Differenzspektrums um einen vorgegebenen Transformationsparameter größer als die Wellenlänge des ersten Transformationsspektrums und die zweite Wellenlänge des ersten Differenzspektrums um den Transformationsparameter kleiner als die Wellenlänge des ersten Transformationsspektrums ist, wobei das Datenverarbeitungsgerät derart ausgebildet ist, dass als Transformationsparameter ein Wert zwischen 0.2 und 0.8 des Betrages der Differenz der ersten Wellenlänge und der zweiten Wellenlänge verwendet wird, und das zweite Differenzspektrum in ein zweites Transformationsspektrum überführt wird, wobei einer Vielzahl von Wellenlängen jeweils ein Intensitätswert zugeordnet wird, und sich der Intensitätswert einer Wellenlänge des zweiten Transformationsspektrums durch Addition des Betrages eines ersten Intensitätswertes einer ersten Wellenlänge des zweiten Differenzspektrums und eines zweiten Intensitätswertes einer zweiter Wellenlänge des zweiten Differenzspektrums berechnet, wobei die erste Wellenlänge des zweiten Differenzspektrums um den Transformationsparameter größer als die Wellenlänge des zweiten Transformationsspektrums und die zweite Wellenlänge des zweiten Differenzspektrums um den Transformationsparameter kleiner als die Wellenlänge des zweiten Transformationsspektrums ist, und das Raman-Spektrum durch Addition des ersten Transformationsspektrums und des zweiten Transformationsspektrums berechnet wird.

Vorzugsweise wird als Transformationsparameter der halbe Betrag der Differenz der ersten Wellenlänge und der zweiten Wellenlänge verwendet. Vorzugsweise ist die Anregungslichtquelle eine Laserdiode mit einem internen frequenz-selektiven Element. Vorzugsweise ist die Laserdiode zur Erzeugung unterschiedlicher Anregungswellenlängen mit einer von einem Modulator modulierten Stromquelle verbunden, wobei der Modulator die Stromquelle alternierend moduliert. Vorzugsweise erfolgt das Hin- und Herschalten mit einer Frequenz größer als 1 Hz. Vorzugsweise ist das spektral-optische System ein Spektrograph mit CCD-Detektor.

Vorzugsweise ist das spektral-optische System und/oder das Datenverarbeitungsgerät mit dem Modulator verbunden und die Detektion der einzelnen RamanSpektren unterschiedlicher Anregungswellenlängen ist mit der alternierenden Ansteuerung der Laserdiode synchronisiert. Vorzugsweise ist der Modulator ein Funktionsgenerator. Vorzugsweise ist der Modulator ein Rechteckgenerator. Vorzugsweise weisen das Mittel zum Einkoppeln der Anregungsstrahlung in das zu untersuchende Medium und das Mittel zum Einkoppeln der vom zu untersuchenden Medium gestreuten Strahlung in das spektral-optisches System eine optische Faser und einen Raman-Messkopf auf. Vorzugsweise ist zwischen Laserdiode und zu untersuchendem Medium ein optischer Verstärker angeordnet. Vorzugsweise ist das interne frequenzselektive Element ein Gitter, ein Etalon oder ein Mach-Zehnder-Interferometer.

Die Erfindung wird nachstehend anhand der Figuren näher erläutert. Es zeigen:

Fig. 1      eine Vorrichtung zur Erzeugung einer Anregungsstrahlung und zur Detektion eines Raman-Spektrums gemäß einer bevorzugten Ausführungsvariante der Erfindung,

Fig. 2      zwei gemessene und aufgrund unterschiedlicher Anregungswellenlängen gegeneinander verschobene Raman-Spektren,

Fig. 3      die in Fig. 2 gemessenen Raman-Spektren, nachdem diese zueinander in ihrer Intensität normiert wurden sowie ein danach daraus gebildetes Differenzspektrum,

Fig. 4      ein aus dem in Fig. 3 gezeigten Differenzspektrum mittels des erfindungsgemäßen Verfahrens erhaltenes Transformationsspektrum,

Fig. 5      zwei aus den in Fig. 2 gemessenen Raman-Spektren mittels des erfindungsgemäßen Verfahrens rekonstruierte Raman-Spektren, die nach einfacher bzw. fünffacher Rekonstruktion aus denselben Daten ermittelt wurden, im Vergleich zu einem herkömmlich gemessenen Raman-Spektrum von Kalziumsulfat,

Fig. 6      die Darstellung weiterer für die Rekonstruktion geeigneter Punkte zum Zweck der Mehrfachanwendung (Punktepaare sind durch Symbole markiert),

Fig. 7      der Arbeitsbereich der Methode, aufgetragen als Signalintensität über dem Quotienten aus $\Delta\nu_{Laser}$ / $FWHM_{Peak}$,

Fig. 8      ein herkömmlich gemessenes Raman-Spektrum und ein mittels des erfindungsgemäßen Verfahrens ermitteltes Raman-Spektrum von

100 $\mu M$ Kupfer(II)-phthalocyanin-tetrasulfonsäure Tetranatriumsalz in destilliertem Wasser,

Fig. 9      verschiedene mittels des erfindungsgemäßen Verfahrens ermittelte Raman-Spektren von Kupfer(II)-phthalocyanin-tetrasulfonsäure Tetranatriumsalz unterschiedlicher Konzentration in destilliertem Wasser, und

Fig.10      die Kalibrierkurve für das Ramansignal bei 1530 cm$^{-1}$ von Fig. 9.

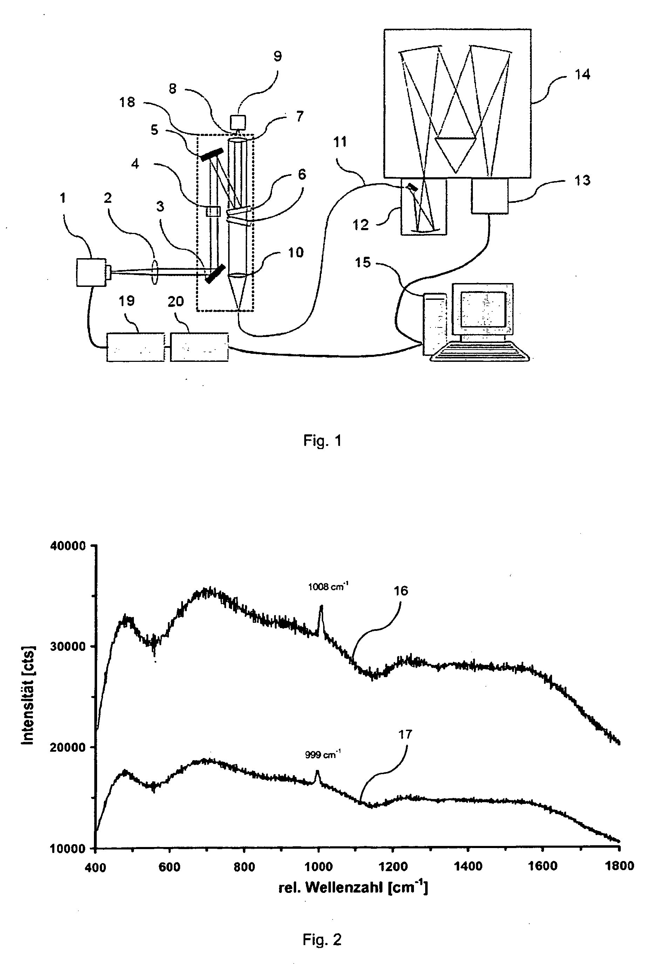

Die Aufnahme von SERD-Spektren unterscheidet sich von herkömmlichen Ramanmessungen dadurch, dass anstelle einer Einzelmessung zwei Messungen an derselben Probe 9, mit zwei Anregungswellenlängen $\lambda 1$ und $\lambda 2$ durchgeführt werden, die um eine Wellenlängendifferenz gegeneinander verschoben sind. Für die Messungen wird der in Fig. 1 gezeigte Aufbau verwendet. Der DFB-Diodenlaser 1 wird nacheinander mit zwei unterschiedlichen Injektionsströmen angesteuert. Dadurch verschieben sich die Ramansignale beider Spektren entsprechend $\Delta$ gegeneinander, wohingegen der breitbandige Untergrund in 1. Näherung keine Veränderung erfährt (Fig. 2). Die Intensitäten der beiden Spektren 16 und 17 sind unterschiedlich, da die Laserleistung von der eingestellten Stromstärke abhängt.

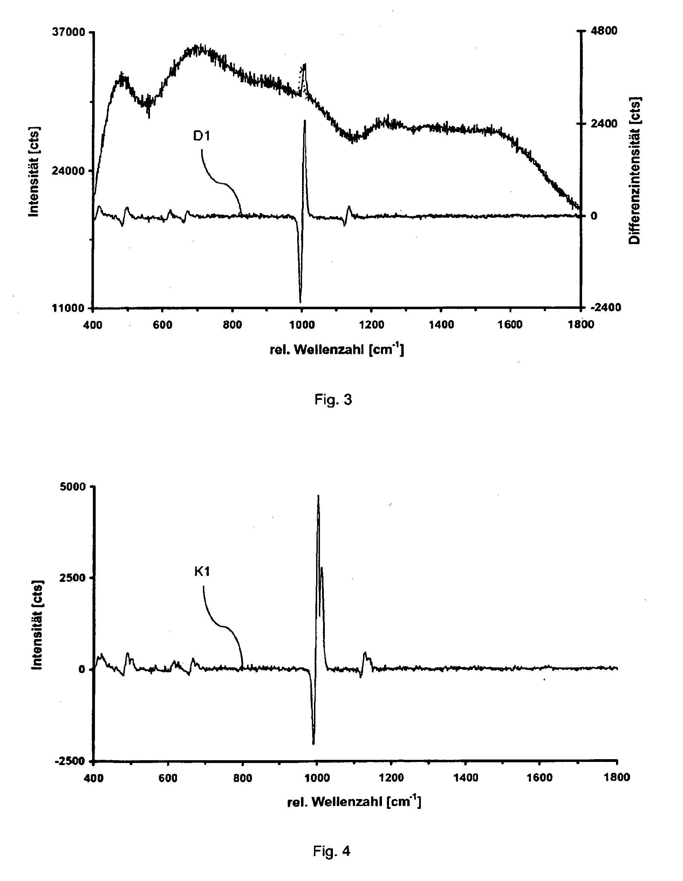

Anschließend werden die beiden Ramanspektren 16 und 17 in ihrer Intensität aufeinander normiert und die Differenz gebildet (Fig. 3). Das resultierende Differenzspektrum D1 wird durch den erfindungsgemäßen Rekonstruktionsalgorithmus zunächst in das Transformationsspektrum K1 überführt (Fig. 4), aus dem durch Addition mit K2 das Raman-Spektrum R1 rekonstruiert wird (Fig. 5).

Ein weiterer Vorteil gegenüber den bisherigen Rekonstruktionsmethoden ist die Möglichkeit der Mehrfachanwendung des Rekonstruktionsverfahrens.

Mehrfachanwendung des Rekonstruktionsverfahrens bedeutet gemäß der vorliegenden Erfindung, dass die Schritte:

-      das erste Differenzspektrum D1 in ein erstes Transformationsspektrum K1 überführt wird, wobei einer Vielzahl von Wellenlängen jeweils ein Intensitätswert zugeordnet wird, und sich der Intensitätswert einer Wellenlänge des ersten Transformationsspektrums K1 durch Addition eines ersten Intensitätswertes einer ersten Wellenlänge des ersten Differenzspektrums D1 und des Betrages eines zweiten Intensitätswertes einer zweiten Wellenlänge des ersten Differenzspektrums D1 berechnet, wobei die erste Wellenlänge des ersten Differenzspektrums D1 um einen vorgegebenen Transformationsparameter $\delta$ größer als die Wellenlänge des ersten Transformationsspektrums K1 und die zweite Wellenlänge des ersten Differenzspektrums D1 um den Transformationsparameter δ kleiner als die Wellenlänge des ersten Transformationsspektrums K1 ist, und

- das zweite Differenzspektrum D2 in ein zweites Transformationsspektrum K2 überführt wird, wobei einer Vielzahl von Wellenlängen jeweils ein Intensitätswert zugeordnet wird, und sich der Intensitätswert einer Wellenlänge des zweiten Transformationsspektrums K2 durch Addition des Betrages eines ersten Intensitätswertes einer ersten Wellenlänge des zweiten Differenzspektrums D2 und eines zweiten Intensitätswertes einer zweiten Wellenlänge des zweiten Differenzspektrums D2 berechnet, wobei die erste Wellenlänge des zweiten Differenzspektrums D2 um den Transformationsparameter δ größer als die Wellenlänge des zweiten Transformationsspektrums K2 und die zweite Wellenlänge des zweiten Differenzspektrums D2 um den Transformationsparameter δ kleiner als die Wellenlänge des zweiten Transformationsspektrums K2 ist,

mehrfach durchgeführt werden, wobei bei der Mehrfachanwendung der Transformationsparameter δ zwischen 0,2 Δ und 0,8 Δ variiert wird und die so erhaltene Vielzahl von Transformationsspektren K1, K2 aufsummiert werden.

Durch Variation des Inkrements δ (bei n=1 gilt vorzugsweise δ = Δ/2) können aus denselben Rohdaten n weitere Spektren konstruiert und anschließend addiert werden. Dies ist bei *n*-facher Anwendung annähernd äquivalent zu *n* einzelnen SERDS-Messungen. Das Rauschen nimmt bei n-facher Anwendung um den Faktor $\sqrt{n}$ ab und das Signal in erster Näherung um den Faktor *n* zu. Der Algorithmus kann so oft angewendet werden, bis keine weitere Verbesserung des Signal/Untergrundverhältnisses mehr erreicht wird. Die Zahl der Wiederholungen ist dabei limitiert durch die Anzahl der Datenpunkte im Bereich der Extrema des Differenzpeaks (siehe Fig. 6). Die Zahl der Wiederholungen kann maximal die Anzahl der Pixel k im Bereich der Halbwertsbreite FWHM des Ramansignals annehmen. Da Wiederholungen im Bereich kleiner Differenzintensitäten nicht mehr zu Verbesserung der SERDS-Intensität führen, wird die Zahl der Wiederholungen der Anwendung der Transformation n bevorzugt zwischen 1 und k/2 gewählt. Der Abstand δ wird bei Mehrfachanwendung des Algorithmus bevorzugt vom halben Wellenlängenabstand $\Delta_{Laser}$ ausgehend in geradzahligen Schritten um bis zu +/- k/4 Pixel variiert.

Durch fünffache Anwendung des Rekonstruktionsverfahrens kann ein deutlich verbessertes rekonstruiertes Raman-Spektrum R2 erhalten werden (Fig. 5).

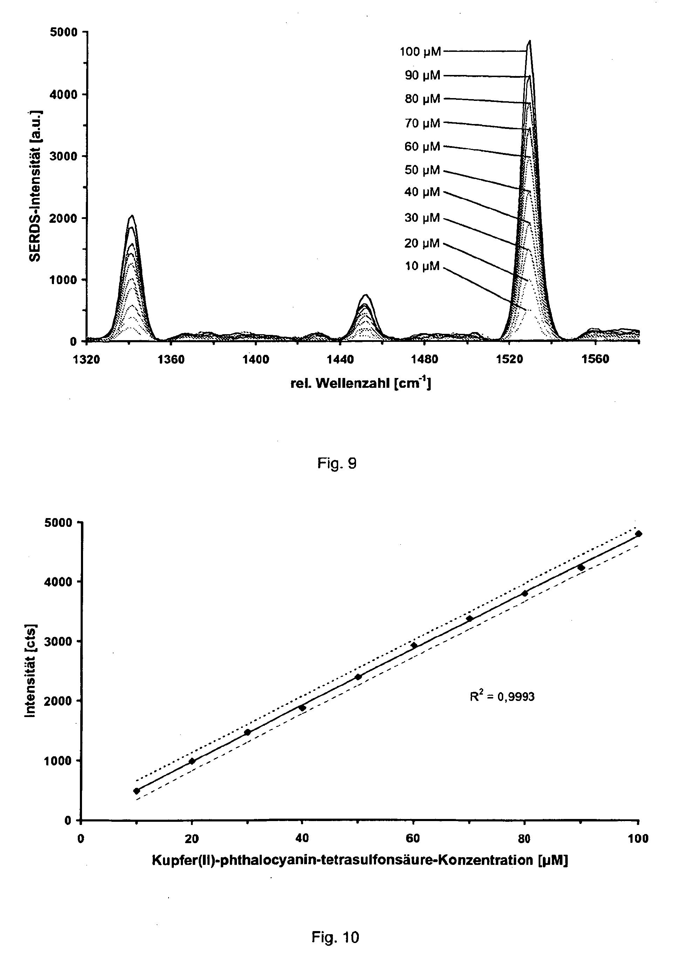

Die Fig. 8 bis 10 zeigen die quantitative Auswertung einer Konzentrationsmessreihe am Beispiel von Kupfer(II)-phthalocyanin-tetrasulfonsäure Tetranatriumsalz in Wasser konventionell und mit SERDS.

Das erfindungsgemäße Auswerteverfahren wurde zunächst an stark streuender Tafelkreide als Testobjekt erprobt. Dabei konnte eine Verbesserung des Signal/Untergrundrauschverhältnis $S/\sigma_{BGN}$ um den Faktor 48 erreicht werden. Die Positionen und relativen Intensitäten der Signale bleiben erhalten und ermöglichen die qualitative Zuordnung im erfindungsgemäß rekonstruierten SERD-Spektrum mit höherer Trennschärfe als im konventionellen Ramanspektrum, da sich die Halbwertsbreiten der Signale durch den Algorithmus von beobachteten 12 cm$^{-1}$ auf 9,5 cm$^{-1}$ verringern. Alle schwachen Ramansignale, die im konventionellen Kreidespektrum vom Untergrund maskiert sind, wurden in den SERD-Spektren an den Positionen gefunden, die von einem Gipskristallspektrum bekannt sind.

Durch Aufnehmen einer Kalibrierkurve von Kupfer(II)-phthalocyanin-tetrasulfonsäure Tetranatriumsalz in destilliertem Wasser wurde gezeigt, dass die SERDS-Messungen quantitativ auswertbar sind. Die Kalibrierkurve war linear und die Nachweisgrenze lag bei der SERDS-Messreihe mit 3 μM niedriger als bei der Raman-Messreihe mit 3,4 μM. Den limitierenden Faktor stellt hier eher die Ungenauigkeit beim Anmischen der Lösung dar, der in die Berechnung der Nachweisgrenze eingeht.

Es wurde erfolgreich demonstriert, dass SERDS durch den neuen Auswertealgorithmus für qualitative und quantitative Messungen geeignet ist. Die Qualität der SERD-Spektren war dabei zu jedem Zeitpunkt signifikant besser als die der konventionell aufgenommenen Raman-Spektren. Der neu entwickelte Rekonstruktionsalgorithmus erlaubt erstmalig eine automatisierte und vollkommen benutzerunabhängige Onlineanalytik. Nahezu jedes Ramansystem ließe sich mit geringem Aufwand kostengünstig für den Einsatz von SERDS anpassen. Zudem ist die entwickelte Technik sehr gut für mobilen Einsatz miniaturisierter Ramansysteme, beispielsweise in der Prozesskontrolle geeignet. Die freie Wahl der Anregungswellenlänge ermöglicht eine Anpassung der Empfindlichkeit für jeden Anwendungsbereich. Zusätzlich ist der Einsatz von SERDS grundsätzlich in Kombination mit anderen Ramantechniken, wie z.B. SERS und Resonanz-Ramanspektroskopie denkbar.

Bezugszeichenliste

| | |
|---|---|
| 1 | Laserdiode |
| 2 | erste Linse |
| 3 | erster Spiegel |
| 4 | Bandpassfilter |
| 5 | zweiter Spiegel |
| 6 | Ramanfilter (Kanten- oder Notchfilter) |
| 7 | zweite Linse |
| 8 | Anregungsstrahlung |
| 9 | zu untersuchendes Medium / Probe (in einem Gefäß) |

10    dritte Linse
11    optische Faser
12    spektral-optisches System
13    CCD-Detektor
14    Spektrograph
15    Datenverarbeitungsgerät
16    gemessenes Raman-Spektrum bei Anregungswellenlänge $\lambda_1$
17    gemessenes Raman-Spektrum bei Anregungswellenlänge $\lambda_2$
18    Ramanmesskopf
19    Stromversorgung
20    Funktionsgenerator
D1    erstes Differenzspektrum aus 16 und 17
D2    zweites Differenzspektrum aus 17 und 16
K1    erstes Transformationsspektrum
K2    zweites Transformationsspektrum
R, R1  erfindungsgemäß rekonstruiertes Raman-Spektrum
R2    erfindungsgemäß rekonstruiertes Raman-Spektrum nach fünffacher Anwendung
$\Delta$    Wellenlängendifferenz
$\delta$    Transformationsparameter

**Patentansprüche**

1.  Verfahren zur Erzeugung und zur Detektion eines Raman-Spektrums eines zu untersuchenden Mediums (9) mit folgenden Verfahrensschritten:

    - Einstrahlen von Anregungsstrahlung (8) auf das zu untersuchende Medium (9), wobei das zu untersuchende Medium (9) zeitlich versetzt mit einer ersten Anregungsstrahlung einer ersten Wellenlänge ($\lambda$1) und einer zweiten Anregungsstrahlung einer zweiten Wellenlänge ($\lambda$2) bestrahlt wird, wobei sich die erste Wellenlänge ($\lambda$1) von der zweiten Wellenlänge ($\lambda$2) unterscheidet,
    - spektrale Analyse der vom zu untersuchenden Medium (9) gestreuten ersten Anregungsstrahlung, wobei aus der gestreuten ersten Anregungsstrahlung ein erstes Spektrum (16) detektiert wird, das einer Vielzahl von Wellenlängen jeweils einen Intensitätswert zuordnet,
    - spektrale Analyse der vom zu untersuchenden Medium (9) gestreuten zweiten Anregungsstrahlung, wobei aus der gestreuten zweiten Anregungsstrahlung ein zweites Spektrum (17) detektiert wird, das einer Vielzahl von Wellenlängen jeweils einen Intensitätswert zuordnet,
    - Berechnung eines Raman-Spektrums (R1) des zu untersuchenden Mediums (9) aus dem ersten Spektrum (16) und dem zweiten Spektrum (17),

    **dadurch gekennzeichnet, dass**

das erste Spektrum (16) und das zweite Spektrum (17) in Bezug auf ihre Intensitätswerte zueinander normiert werden, und nachfolgend:

    a) ein erstes Differenzspektrum (D1) aus der Differenz des ersten Spektrums (16) und des zweiten Spektrums (17) berechnet wird,
    b) ein zweites Differenzspektrum (D2) aus der Differenz des zweiten Spektrums (17) und des ersten Spektrums (16) berechnet wird,
    c) das erste Differenzspektrum (D1) in ein erstes Transformationsspektrum (K1) überführt wird, wobei einer Vielzahl von Wellenlängen jeweils ein Intensitätswert zugeordnet wird, und sich der Intensitätswert einer Wellenlänge des ersten Transformationsspektrums (K1) durch Addition eines ersten Intensitätswertes einer ersten Wellenlänge des ersten Differenzspektrums (D1) und des Betrages eines zweiten Intensitätswertes einer zweiten Wellenlänge des ersten Differenzspektrums (D1) berechnet, wobei die erste Wellenlänge des ersten Differenzspektrums (D1) um einen vorgegebenen Transformationsparameter ($\delta$) größer als die Wellenlänge des ersten Transformationsspektrums (K1) und die zweite Wellenlänge des ersten Differenzspektrums (D1) um den Transformationsparameter ($\delta$) kleiner als die Wellenlänge des ersten Transformationsspektrums (K1) ist, wobei als Transformationsparameter ($\delta$) ein Wert zwischen 0.2 und 0.8 des Betrages der Differenz der ersten Wellenlänge ($\lambda$1) und der zweiten Wellenlänge ($\lambda$2) verwendet wird,
    d) das zweite Differenzspektrum (D2) in ein zweites Transformationsspektrum (K2) überführt wird, wobei einer Vielzahl von Wellenlängen jeweils ein Intensitätswert zugeordnet wird, und sich der Intensitätswert einer Wellenlänge des zweiten Transformationsspektrums (K2) durch Addition des Betrages eines ersten Intensitätswertes einer ersten Wellenlänge des zweiten Differenzspektrums (D2) und eines zweiten Intensitätswertes einer zweiten Wellenlänge des zweiten Differenzspektrums (D2) berechnet, wobei die erste Wellenlänge des zweiten Differenzspektrums (D2) um den Transformationsparameter ($\delta$) größer als die Wellenlänge des zweiten Transformationsspektrums (K2) und die zweite Wellenlänge des zweiten Differenzspektrums (D2) um den Transformationsparameter ($\delta$) kleiner als die Wellenlänge des zweiten Transformationsspektrums (K2) ist, und
    e) das Raman-Spektrum (R1) durch Addition des ersten Transformationsspektrums (K1) und des zweiten Transformationsspektrums (K2) berechnet wird.

2.  Verfahren nach Anspruch 1,

**dadurch gekennzeichnet, dass**
als Transformationsparameter ($\delta$) ein Wert zwischen 0.4 und 0.6 des Betrages der Differenz der ersten Wellenlänge ($\lambda$1) und der zweiten Wellenlänge ($\lambda$2) verwendet wird.

3. Verfahren nach Anspruch 2,
**dadurch gekennzeichnet, dass**
als Transformationsparameter ($\delta$) der halbe Betrag der Differenz $(\frac{\Delta}{2})$ der ersten Wellenlänge ($\lambda$1) und der zweiten Wellenlänge ($\lambda$2) verwendet wird.

4. Verfahren nach einem der vorhergehenden Ansprüche,
**dadurch gekennzeichnet, dass**
die Schritte c) und d) vor Ausführung des Schrittes e) mehrfach wiederholt werden, wobei der Transformationsparameter ($\delta$) bei jeder Wiederholung der Schritte c) und d) variiert wird, wodurch eine Vielzahl erster Transformationsspektren (K1) und eine Vielzahl korrespondierender zweiter Transformationsspektren (K2) erhalten wird, wobei in Schritt e) das Raman-Spektrum (R1) durch Addition der ersten Transformationsspektren (K1) und der zweiten Transformationsspektren (K2) berechnet wird.

5. Verfahren nach Anspruch 4,
**dadurch gekennzeichnet, dass**
der Transformationsparameter ($\delta$) bei jeder Wiederholung der Schritte c) und d) vergrößert oder verringert wird.

6. Verfahren nach Anspruch 5,
**dadurch gekennzeichnet, dass**
als Transformationsparameter ($\delta$) beim erstmaligen durchführen der Schritte c) und d) der halbe Betrag der Differenz $(\frac{\Delta}{2})$ der ersten Wellenlänge ($\lambda$1) und der zweiten Wellenlänge ($\lambda$2) verwendet wird, und nachfolgend der Transformationsparameter ($\delta$) innerhalb des Intervalls 0.2 bis 0.8 des Betrages der Differenz der ersten Wellenlänge ($\lambda$1) und der zweiten Wellenlänge ($\lambda$2) variiert wird.

7. Vorrichtung zur Erzeugung einer Anregungsstrahlung und zur Detektion eines Raman-Spektrums (R1) eines zu untersuchenden Mediums (9) aufweisend:

    - eine Anregungslichtquelle (1),
    - Mittel zur Einkopplung der von der Anregungslichtquelle (1) emittierten Anregungsstrahlung in das zu untersuchende Medium (9),
    - Mittel zur Einkopplung der vom zu untersuchenden Medium (9) gestreuten Strahlung in ein spektral-optisches System (12),
- ein Datenverarbeitungsgerät (15), das mit dem spektral-optischen System (12) verbunden ist, wobei das Datenverarbeitungsgerät (15) aus den mindestens zwei detektierten Raman-Spektren (16, 17) unterschiedlicher Anregungswellenlängen ($\lambda$1, $\lambda$2) ein Raman-Spektrum des zu untersuchenden Mediums (9) berechnet, in dem der Fluoreszenzuntergrund rechnerisch eliminiert ist, und

**dadurch gekennzeichnet, dass**
das Datenverarbeitungsgerät (15) ausgebildet ist, das erste Spektrum (16) und das zweite Spektrum (17) in Bezug auf ihre Intensitätswerte zueinander zu normieren, und nachfolgend:

    a) ein erstes Differenzspektrum (D1) aus der Differenz des ersten Spektrums (16) und des zweiten Spektrums (17) berechnet wird,
    b) ein zweites Differenzspektrum (D2) aus der Differenz des zweiten Spektrums (17) und des ersten Spektrums (16) berechnet wird,
    c) das erste Differenzspektrum (D1) in ein erstes Transformationsspektrum (K1) überführt wird, wobei einer Vielzahl von Wellenlängen jeweils ein Intensitätswert zugeordnet wird, und sich der Intensitätswert einer Wellenlänge des ersten Transformationsspektrums (K1) durch Addition eines ersten Intensitätswertes einer ersten Wellenlänge des ersten Differenzspektrums (D1) und des Betrages eines zweiten Intensitätswertes einer zweiter Wellenlänge des ersten Differenzspektrums (D1) berechnet, wobei die erste Wellenlänge des ersten Differenzspektrums (D1) um einen vorgegebenen Transformationsparameter ($\delta$) größer als die Wellenlänge des ersten Transformationsspektrums (K1) und die zweite Wellenlänge des ersten Differenzspektrums (D1) um den Transformationsparameter ($\delta$) kleiner als die Wellenlänge des ersten Transformationsspektrums (K1) ist, wobei das Datenverarbeitungsgerät (15) derart ausgebildet ist, dass als Transformationsparameter ($\delta$) ein Wert zwischen 0.2 und 0.8 des Betrages der Differenz der ersten Wellenlänge ($\lambda$1) und der zweiten Wellenlänge ($\lambda$2) verwendet wird,
    d) das zweite Differenzspektrum (D2) in ein zweites Transformationsspektrum (K2) überführt wird, wobei einer Vielzahl von Wellenlängen jeweils ein Intensitätswert zugeordnet wird, und sich der Intensitätswert einer Wellenlänge des zweiten Transformationsspektrums (K2) durch Addition des Betrages eines ersten Intensitätswertes einer ersten Wellenlänge des zweiten Differenzspektrums (D2) und eines zweiten Intensitätswertes einer zweiter Wellenlänge des zweiten Differenzspektrums (D2) berechnet, wobei die erste Wellenlänge des zweiten Differenzspektrums (D2) um den Transformationsparameter ($\delta$) größer als die Wellenlänge des zweiten Transformationsspektrums (K2) und die zweite Wellenlänge des zweiten Differenzspektrums (D2) um den Transformationsparameter ($\delta$) kleiner als die Wellenlänge des zweiten Transformationsspektrums (K2) ist, und
e) das Raman-Spektrum (R1) durch Addition des ersten Transformationsspektrums (K1) und des zweiten Transformationsspektrums (K2) berechnet wird.

8. Vorrichtung nach Anspruch 7,
**dadurch gekennzeichnet, dass**
das Datenverarbeitungsgerät (15) derart ausgebildet ist, dass als Transformationsparameter ($\delta$) ein Wert zwischen 0.4 und 0.6 des Betrages der Differenz der ersten Wellenlänge ($\lambda$1) und der zweiten Wellenlänge ($\lambda$2) verwendet wird.

9. Vorrichtung nach Anspruch 8,
**dadurch gekennzeichnet, dass**
das Datenverarbeitungsgerät (15) derart ausgebildet ist, dass als Transformationsparameter ($\delta$) der halbe Betrag der Differenz $\left(\dfrac{\Delta}{2}\right)$ der ersten Wellenlänge ($\lambda$1) und der zweiten Wellenlänge ($\lambda$2) verwendet wird.

10. Vorrichtung nach einem der Ansprüche 7 bis 9,
**dadurch gekennzeichnet, dass**
das Datenverarbeitungsgerät (15) derart ausgebildet ist, dass die Schritte c) und d) vor Ausführung des Schrittes e) mehrfach wiederholt werden, wobei der Transformationsparameter ($\delta$) bei jeder Wiederholung der Schritte c) und d) variiert wird, wodurch eine Vielzahl erster Transformationsspektren (K1) und eine Vielzahl korrespondierender zweiter Transformationsspektren (K2) erhalten wird, wobei in Schritt e) das Raman-Spektrum (R1) durch Addition der erhaltenen ersten Transformationsspektren (K1) und der erhaltenen zweiten Transformationsspektren (K2) berechnet wird.

11. Vorrichtung nach Anspruch 10,
**dadurch gekennzeichnet, dass**
das Datenverarbeitungsgerät (15) derart ausgebildet ist, dass der Transformationsparameter ($\delta$) bei jeder Wiederholung der Schritte c) und d) vergrößert oder verringert wird.

12. Vorrichtung nach einem der Ansprüche 10 und 11,
**dadurch gekennzeichnet, dass**
das Datenverarbeitungsgerät (15) derart ausgebildet ist, dass als Transformationsparameter ($\delta$) beim erstmaligen durchführen der Schritte c) und d) der halbe Betrag der Differenz $\left(\dfrac{\Delta}{2}\right)$ der ersten Wellenlänge ($\lambda$1) und der zweiten Wellenlänge ($\lambda$2) verwendet wird, und nachfolgend der Transformationsparameter ($\delta$) innerhalb des Intervalls 0.2 bis 0.8 des Betrages der Differenz der ersten Wellenlänge ($\lambda$1) und der zweiten Wellenlänge ($\lambda$2) variiert wird.

13. Vorrichtung nach einem der Ansprüche 7 bis 12,
**dadurch gekennzeichnet, dass**
die Anregungslichtquelle eine Laserdiode (1) mit einem internen frequenz-selektiven Element ist.

**Claims**

1. A method for generating and for detecting a Raman spectrum of a medium (9) to be examined, including the method steps of:

- exposing the medium (9) to be examined to excitation radiation (8), wherein the medium (9) to be examined is exposed to a first excitation radiation having a first wavelength ($\lambda$1) and to a second excitation radiation having a second wavelength ($\lambda$2) at different times, the first wavelength ($\lambda$1) being different from the second wavelength ($\lambda$2),
- spectral analysis of the first excitation radiation once it has been scattered by the medium (9) to be examined, wherein the scattered first excitation radiation is used to detect a first spectrum (16) that assigns an intensity value to each of a plurality of wavelengths,
- spectral analysis of the second excitation radiation once it has been scattered by the medium (9) to be examined, wherein the scattered second excitation radiation is used to detect a second spectrum (17) that assigns an intensity value to each of a plurality of wavelengths,
- computing a Raman spectrum (R1) of the medium (9) to be examined, based on the first spectrum (16) and the second spectrum (17),

**characterized in that**
the first spectrum (16) and the second spectrum (17) are normalized relative to each other as regards their intensity values, and subsequently:

a) a first difference spectrum (D1) is computed based on the difference of the first spectrum (16) and the second spectrum (17),
b) a second difference spectrum (D2) is computed based on the difference of the second spectrum (17) and the first spectrum (16),
c) the first difference spectrum (D1) is transformed into a first transformation spectrum (K1), wherein an intensity value is assigned to each of a plurality of wavelengths and the intensity value of a wavelength of the first transformation spectrum (K1) is computed by adding a first intensity value of a first wavelength of the first difference spectrum (D1) and a second intensity value of a second wavelength of the first difference spectrum (D1), the first wavelength of the first difference spectrum (D1) exceeding the wavelength of the first transformation spectrum (K1) by a predefined transformation parameter ($\delta$) and the second wavelength of the first difference spectrum (D1) being smaller than the wavelength of the first transformation spectrum (K1) by said transformation parameter ($\delta$), wherein a value between 0.2 and 0.8 of the difference of the first wavelength ($\lambda$1) and the second wavelength ($\lambda$2) is used as transformation parameter ($\delta$),

d) the second difference spectrum (D2) is transformed into a second transformation spectrum (K2), wherein an intensity value is assigned to each of a plurality of wavelengths and the intensity value of a wavelength of the second transformation spectrum (K2) is computed by adding a first intensity value of a first wavelength of the second difference spectrum (D2) and a second intensity value of a second wavelength of the second difference spectrum (D2), the first wavelength of the second difference spectrum (D2) exceeding the wavelength of the second transformation spectrum (K2) by the transformation parameter ($\delta$) and the second wavelength of the second difference spectrum (D2) being smaller than the wavelength of the second transformation spectrum (K2) by said transformation parameter ($\delta$), and

e) the Raman spectrum (R1) is computed by adding the first transformation spectrum (K1) and the second transformation spectrum (K2).

2. The method according to claim 1,
**characterized in that**
a value between 0.4 and 0.6 of the difference of the first wavelength ($\lambda$1) and the second wavelength ($\lambda$2) is used as transformation parameter ($\delta$).

3. The method according to claim 2,
**characterized in that**

half of the difference $(\frac{\Delta}{2})$ of the first wavelength ($\lambda$1) and the second wavelength ($\lambda$2) is used as transformation parameter ($\delta$).

4. The method according to any one of the preceding claims,

**characterized in that**
steps c) and d) are repeated several times prior to performing step e), wherein the transformation parameter ($\delta$) is varied each time steps c) and d) are repeated, thereby obtaining a plurality of first transformation spectra (K1) and a plurality of corresponding second transformation spectra (K2), wherein in step e) the Raman spectrum (R1) is computed by adding the first transformation spectra (K1) and the second transformation spectra (K2).

5. The method according to claim 4,
**characterized in that**
the transformation parameter ($\delta$) is increased or reduced each time steps c) and d) are repeated.

6. The method according to claim 5,
**characterized in that**

half of the difference $(\frac{\Delta}{2})$ of the first wavelength ($\lambda$1) and the second wavelength ($\lambda$2) is used as transformation parameter ($\delta$) when steps c) and d) are performed for the first time, and subsequently the transformation parameter ($\delta$) is varied within the interval ranging from 0.2 to 0.8 of the difference of the first wavelength ($\lambda$1) and the second wavelength ($\lambda$2).

7. A device for generating an excitation radiation and for detecting a Raman spectrum (R1) of a medium (9) to be examined, comprising:

- an excitation light source (1),
- means for coupling the excitation radiation emitted by the excitation light source (1) into the medium (9) to be examined,
- means for coupling the radiation scattered by the medium (9) to be examined into a spectro-optical system (12),
- a data processing unit (15) connected to the spectro-optical system (12), wherein the data processing unit (15) uses the at least two detected Raman spectra (16, 17) of different excitation wavelengths ($\lambda$1, $\lambda$2) to compute a Raman spectrum of the medium (9) to be examined, in which the fluorescent background is eliminated by mathematical calculation, and

**characterized in that**
the data processing unit (15) is designed to normalize the first spectrum (16) and the second spectrum (17) relative to each other as regards their intensity values, and subsequently:

a) a first difference spectrum (D1) is computed based on the difference of the first spectrum (16) and the second spectrum (17),

b) a second difference spectrum (D2) is computed based on the difference of the second spectrum (17) and the first spectrum (16),

c) the first difference spectrum (D1) is transformed into a first transformation spectrum (K1), wherein an intensity value is assigned to each of a plurality of wavelengths and the intensity value of a wavelength of the first transformation spectrum (K1) is computed by adding a first intensity value of a first wavelength of the first difference spectrum (D1) and a second intensity value of a second wavelength of the first difference spectrum (D1), the first wavelength of the first difference spectrum (D1) exceeding the wavelength of the first transformation spectrum (K1) by a predefined transformation parameter ($\delta$) and the second wavelength of the first difference spectrum (D1) being smaller than the wavelength of the first transformation spectrum (K1) by said transformation parameter ($\delta$), wherein the data processing unit is designed such that a value between 0.2 and 0.8 of the difference of the first wavelength ($\lambda$1) and the second wavelength ($\lambda$2) is used as transformation parameter ($\delta$),

d) the second difference spectrum (D2) is transformed into a second transformation spectrum (K2), wherein an intensity value is assigned to each of a plurality of wavelengths and the intensity value of a wavelength of the second transformation spectrum (K2) is computed by adding a first intensity value of a first wavelength of the second difference spectrum (D2) and a second intensity value of a second wavelength of the second difference spectrum (D2), the first wavelength of the second difference spectrum (D2) exceeding the wavelength of the second transformation spectrum (K2) by the transformation parameter ($\delta$) and the second wavelength of the second difference spectrum (D2) being smaller than the wavelength of the second transformation spectrum (K2) by said transformation parameter ($\delta$), and

e) the Raman spectrum (R1) is computed by adding the first transformation spectrum (K1) and the second transformation spectrum (K2).

8. The device according to claim 7, **characterized in that** the data processing unit (15) is designed such that a value between 0.4 and 0.6 of the difference of the first wavelength ($\lambda$1) and the second wavelength ($\lambda$2) is used as transformation parameter ($\delta$).

9. The device according to claim 8, **characterized in that** the data processing unit (15) is designed such that half of the difference $\left(\dfrac{\Delta}{2}\right)$ of the first wavelength ($\lambda$1) and the second wavelength ($\lambda$2) is used as transformation parameter ($\delta$).

10. The device according to any one of claims 7 to 9, **characterized in that** the data processing unit (15) is designed such that steps c) and d) are repeated several times prior to performing step e), wherein the transformation parameter ($\delta$) is varied each time steps c) and d) are repeated, thereby obtaining a plurality of first transformation spectra (K1) and a plurality of corresponding second transformation spectra (K2), wherein in step e) the Raman spectrum (R1) is computed by adding the obtained first transformation spectra (K1) and the obtained second transformation spectra (K2).

11. The device according to claim 10, **characterized in that** the data processing unit (15) is designed such that the transformation parameter ($\delta$) is increased or reduced each time steps c) and d) are repeated.

12. The device according to either of claims 10 and 11, **characterized in that** the data processing unit (15) is designed such that half of the difference $\left(\dfrac{\Delta}{2}\right)$ of the first wavelength ($\lambda$1) and the second wavelength ($\lambda$2) is used as transformation parameter ($\delta$) when steps c) and d) are performed for the first time, and subsequently the transformation parameter ($\delta$) is varied within the interval ranging from 0.2 to 0.8 of the difference of the first wavelength ($\lambda$1) and the second wavelength ($\lambda$2).

13. The device according to any one of claims 7 to 12, **characterized in that** the excitation light source is a laser diode (1) including an internal frequency-selective element.

**Revendications**

1. Procédé de production et de détection d'un spectre Raman d'un milieu (9) à étudier, comprenant les étapes de procédé suivantes :

   - irradiation d'un rayonnement d'excitation (8) sur le milieu (9) à étudier, le milieu (9) à étudier étant irradié de façon décalée dans le temps avec un premier rayonnement d'excitation d'une première longueur d'onde ($\lambda$1) et avec un deuxième rayonnement d'excitation d'une deuxième longueur d'onde (λ2), la première longueur d'onde (λ1) étant différente de la deuxième longueur d'onde (λ2),

- analyse spectrale du premier rayonnement d'excitation dispersé par le milieu (9) à étudier, un premier spectre (16) étant détecté à partir du premier rayonnement d'excitation dispersé et affectant respectivement une valeur d'intensité à une multiplicité de longueurs d'onde,

- analyse spectrale du deuxième rayonnement d'excitation dispersé par le milieu (9) à étudier, un deuxième spectre (17) étant détecté à partir du deuxième rayonnement d'excitation dispersé et affectant respectivement une valeur d'intensité à une multiplicité de longueurs d'onde,

- calcul d'un spectre Raman (R1) du milieu (9) à étudier à partir du premier spectre (16) et du deuxième spectre (17),

**caractérisé en ce que**
le premier spectre (16) et le deuxième spectre (17) sont normalisés l'un par rapport à l'autre quant à leurs valeurs d'intensité, et ensuite

a) un premier spectre différentiel (D1) est calculé à partir de la différence du premier spectre (16) et du deuxième spectre (17),

b) un deuxième spectre différentiel (D2) est calculé à partir de la différence du deuxième spectre (17) et du premier spectre (16),

c) le premier spectre différentiel (D1) est transformé en un premier spectre de transformation (K1), une valeur d'intensité étant respectivement affectée à une multiplicité de longueurs d'onde, et la valeur d'intensité d'une longueur d'onde du premier spectre de transformation (K1) se calculant par l'addition d'une première valeur d'intensité d'une première longueur d'onde du premier spectre différentiel (D1) et du montant d'une deuxième valeur d'intensité d'une deuxième longueur d'onde du premier spectre différentiel (D1), la première longueur d'onde du premier spectre différentiel (D1) étant plus grande, selon un paramètre de transformation (δ) prédéfini, que la longueur d'onde du premier spectre de transformation (K1), et la deuxième longueur d'onde du premier spectre différentiel (D1) étant plus petite, selon le paramètre de transformation (δ), que la longueur d'onde du premier spectre de transformation (K1), une valeur entre 0,2 et 0,8 du montant de la différence de la première longueur d'onde (λ1) et de la deuxième longueur d'onde (λ2) étant utilisée en tant que paramètre de transformation (δ),

d) le deuxième spectre différentiel (D2) est transformé en un deuxième spectre de transformation (K2), une valeur d'intensité étant respectivement affectée à une multiplicité de longueurs d'onde, et la valeur d'intensité d'une longueur d'onde du deuxième spectre de transformation (K2) se calculant par l'addition du montant d'une première valeur d'intensité d'une première longueur d'onde du deuxième spectre différentiel (D2) et d'une deuxième valeur d'intensité d'une deuxième longueur d'onde du deuxième spectre différentiel (D2), la première longueur d'onde du deuxième spectre différentiel (D2) étant plus grande, selon le paramètre de transformation (δ), que la longueur d'onde du deuxième spectre de transformation (K2), et la deuxième longueur d'onde du deuxième spectre différentiel (D2) étant plus petite, selon le paramètre de transformation (δ), que la longueur d'onde du deuxième spectre de transformation (K2), et

e) le spectre Raman (R1) est calculé par l'addition du premier spectre de transformation (K1) et du deuxième spectre de transformation (K2).

2. Procédé selon la revendication 1,
**caractérisé en ce**
qu'une valeur entre 0,4 et 0,6 du montant de la différence de la première longueur d'onde (λ1) et de la deuxième longueur d'onde (λ2) est utilisée en tant que paramètre de transformation (δ).

3. Procédé selon la revendication 2,
**caractérisé en ce que**
le demi-montant de la différence (Δ/2) de la première longueur d'onde (λ1) et de la deuxième longueur d'onde (λ2) est utilisé tant que de paramètre de transformation (δ).

4. Procédé selon une des revendications précédentes,
**caractérisé en ce que**
les étapes c) et d) sont répétées plusieurs fois avant l'exécution de l'étape e), le paramètre de transformation (δ) étant modifié lors de chaque répétition des étapes c) et d), et de ce fait une multiplicité de premiers spectres de transformation (K1) et une multiplicité de deuxièmes spectres de transformation (K2) correspondants sont obtenus, le spectre Raman (R1) étant, dans l'étape e), calculé par l'addition des premiers spectres de transformation (K1) et des deuxièmes spectres de transformation (K2).

5. Procédé selon la revendication 4,
**caractérisé en ce que**
le paramètre de transformation (δ) est augmenté ou réduit lors de chaque répétition des étapes c) et d).

6. Procédé selon la revendication 5,
**caractérisé en ce que**
le demi-montant de la différence (Δ/2) de la première longueur d'onde (λ1) et de la deuxième longueur d'onde (λ2) est utilisé en tant que paramètre de

transformation ($\delta$) lors de la première exécution des étapes c) et d), et ensuite le paramètre de transformation ($\delta$) est modifié à l'intérieur de l'intervalle de 0,2 à 0,8 du montant de la différence de la première longueur d'onde ($\lambda 1$) et de la deuxième longueur d'onde ($\lambda 2$).

7. Dispositif pour la production d'un rayonnement d'excitation et pour la détection d'un premier spectre Raman (R1) d'un milieu (9) à étudier, présentant :

   - une source de lumière d'excitation (1),
   - des moyens de couplage du rayonnement d'excitation émis par la source de lumière d'excitation (1) dans le milieu (9) à étudier,
   - des moyens de couplage du rayonnement dispersé par le milieu (9) à étudier dans un système optique spectral (12),
   - un appareil de traitement de données (15) qui est raccordé au système optique spectral (12), l'appareil de traitement de données (15) calculant, à partir des au moins deux spectres Raman (16, 17) détectés de différentes longueurs d'onde d'excitation ($\lambda 1$, $\lambda 2$), un spectre Raman du milieu (9) à étudier dans lequel le fond de fluorescence est éliminé par le calcul, et

   **caractérisé en ce que**
   l'appareil de traitement de données (15) est constitué pour normaliser le premier spectre (16) et le deuxième spectre (17) l'un par rapport à l'autre quant à leurs valeurs d'intensité, et ensuite

   a) un premier spectre différentiel (D1) est calculé à partir de la différence du premier spectre (16) et du deuxième spectre (17),
   b) un deuxième spectre différentiel (D2) est calculé à partir de la différence du deuxième spectre (17) et du premier spectre (16),
   c) le premier spectre différentiel (D1) est transformé en un premier spectre de transformation (K1), une valeur d'intensité étant respectivement affectée à une multiplicité de longueurs d'onde, et la valeur d'intensité d'une longueur d'onde du premier spectre de transformation (K1) se calculant par l'addition d'une première valeur d'intensité d'une première longueur d'onde du premier spectre différentiel (D1) et du montant d'une deuxième valeur d'intensité d'une deuxième longueur d'onde du premier spectre différentiel (D1), la première longueur d'onde du premier spectre différentiel (D1) étant plus grande, selon un paramètre de transformation ($\delta$) prédéfini, que la longueur d'onde du premier spectre de transformation (K1), et la deuxième longueur d'onde du premier spectre différentiel (D1) étant plus petite, selon le paramètre de transformation ($\delta$), que la longueur

d'onde du premier spectre de transformation (K1), l'appareil de traitement de données (15) étant constitué de sorte qu'une valeur entre 0,2 et 0,8 du montant de la différence de la première longueur d'onde ($\lambda 1$) et de la deuxième longueur d'onde ($\lambda 2$) est utilisée en tant que paramètre de transformation ($\delta$),
   d) le deuxième spectre différentiel (D2) est transformé en un deuxième spectre de transformation (K2), une valeur d'intensité étant respectivement affectée à une multiplicité de longueurs d'onde, et la valeur d'intensité d'une longueur d'onde du deuxième spectre de transformation (K2) se calculant par l'addition du montant d'une première valeur d'intensité d'une première longueur d'onde du deuxième spectre différentiel (D2) et d'une deuxième valeur d'intensité d'une deuxième longueur d'onde du deuxième spectre différentiel (D2), la première longueur d'onde du deuxième spectre différentiel (D2) étant plus grande, selon le paramètre de transformation ($\delta$), que la longueur d'onde du deuxième spectre de transformation (K2), et la deuxième longueur d'onde du deuxième spectre différentiel (D2) étant plus petite, selon le paramètre de transformation ($\delta$), que la longueur d'onde du deuxième spectre de transformation (K2), et
   e) le spectre Raman (R1) est calculé par l'addition du premier spectre de transformation (K1) et du deuxième spectre de transformation (K2).

8. Dispositif selon la revendication 7,
   **caractérisé en ce que**
   l'appareil de traitement de données (15) est constitué de telle sorte qu'une valeur entre 0,4 et 0,6 du montant de la différence de la première longueur d'onde ($\lambda 1$) et de la deuxième longueur d'onde ($\lambda 2$) est utilisée en tant que paramètre de transformation (5).

9. Dispositif selon la revendication 8,
   **caractérisé en ce que**
   l'appareil de traitement de données (15) est constitué de telle sorte que le demi-montant de la différence ($\Delta/2$) de la première longueur d'onde ($\lambda 1$) et de la deuxième longueur d'onde ($\Delta/2$) est utilisé tant que de paramètre de transformation ($\delta$).

10. Dispositif selon une des revendications 7 à 9,
    **caractérisé en ce que**
    l'appareil de traitement de données (15) est constitué de telle sorte que les étapes c) et d) sont répétées plusieurs fois avant l'exécution de l'étape e), le paramètre de transformation ($\delta$) étant modifié lors de chaque répétition des étapes c) et d), et de ce fait une multiplicité de premiers spectres de transformation (K1) et une multiplicité de deuxièmes spectres de transformation (K2) correspondants sont obtenus, le spectre Raman (R1) étant, dans l'étape e), calculé par l'addition des premiers spectres de transformation (K1) obtenus et des deuxièmes spectres de transformation (K2) obtenus.

11. Dispositif selon la revendication 10,
**caractérisé en ce que**
l'appareil de traitement de données (15) est constitué de telle sorte que le paramètre de transformation ($\delta$) est augmenté ou réduit lors de chaque répétition des étapes c) et d).

12. Dispositif selon une des revendications 10 et 11,
**caractérisé en ce que**
l'appareil de traitement de données (15) est constitué de telle sorte que le demi-montant de la différence ($\Delta/2$) de la première longueur d'onde ($\lambda 1$) et de la deuxième longueur d'onde ($\lambda 2$) est utilisé en tant que paramètre de transformation ($\delta$) lors de la première exécution des étapes c) et d), et ensuite le paramètre de transformation ($\delta$) est modifié à l'intérieur de l'intervalle de 0,2 à 0,8 du montant de la différence de la première longueur d'onde ($\lambda 1$) et de la deuxième longueur d'onde ($\lambda 2$).

13. Dispositif selon une des revendications 7 à 12,
**caractérisé en ce que**
la source de lumière d'excitation est une diode laser (1) avec un élément interne sélectif en fréquence.

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

**In der Beschreibung aufgeführte Patentdokumente**

- WO 2006134103 A1
- WO 2006130728 A2

**In der Beschreibung aufgeführte Nicht-Patentliteratur**

- **J. ZHAO ; M. M. CARRABA ; F. S. ALLEN.** *Appl. Spectrosc.,* 2002, vol. 56, 834
- **T.F. COONEY ; H.T. SKINNER ; S.M. ANGEL.** *Appl. Spectrosc.,* 1995, vol. 49, 1846-1851
- **STEVEN E. J. BELL ; ELSA S. O. BOURGUIGNON ; ANDREW DENNIS.** *Analyst,* 1998, vol. 123
- **M. MAIWALD ; G. ERBERT ; A. KLEHR ; H.-D. KRONFELDT ; H. SCHMIDT ; B. SUMPF ; G. TRÄNKLE.** *Appl. Phys. B,* 2006, vol. 85, 509-512
- **R.A. MATHIES ; A.P. SHREVE ; N.J. CHEREPY.** *Appl. Spectrosc.,* 1992, vol. 46, 707
- **P. MATOUSEK ; M. TOWRIE ; A. W. PARKER.** Simple reconstruction algorithm for shifted excitation Raman difference spectroscopy. *Applied Spectroscopy,* 2006, vol. 59
- **J. ZHAO ; M. CARRABBA ; F. ALLEN.** *Applied Spectroscopy,* 2002, vol. 56 (7
- **S. T. MCCAIN ; R. M. WILLETT ; D. J. BRADY.** Multi-excitation Raman spectroscopy technique for fluorescence rejection. *Optics Express,* 2008, vol. 16 (15